Europäisches Patentamt

European Patent Office

Office européen des brevets

(11) Veröffentlichungsnummer: **0 407 796 B1**

(12) **EUROPÄISCHE PATENTSCHRIFT**

(45) Veröffentlichungstag der Patentschrift: **04.01.95**

(21) Anmeldenummer: **90112073.3**

(22) Anmeldetag: **26.06.90**

(51) Int. Cl.⁶: **C08G 63/48**, C09D 167/08

(54) **Lufttrocknende Alydharze sowie ihre Verwendung in Beschichtungsmitteln, insbesondere für die Beschichtung von Holz.**

(30) Priorität: **11.07.89 DE 3922702**

(43) Veröffentlichungstag der Anmeldung:
**16.01.91 Patentblatt 91/03**

(45) Bekanntmachung des Hinweises auf die
Patenterteilung:
**04.01.95 Patentblatt 95/01**

(84) Benannte Vertragsstaaten:
**AT BE CH DE DK ES FR GB IT LI NL SE**

(56) Entgegenhaltungen:
**EP-A- 0 001 400**
**US-A- 2 299 547**

**CHEMICAL ABSTRACTS, Band 76, Nr. 24,**
**Juni 1972, Seite 88, Zusammenfassung**
**Nr.142449w, Columbus, Ohio, US; H.A. BHATT**
**et al.: "Fish oil alkyds", & PAINTINDIA 1972,**
**22(1), 19-23, 39**

**C.R. MARTENS: "Technology of paints, var-**
**nishes and lacquers", 1968, Seiten 23-28,**
**New York, US**

(73) Patentinhaber: **BASF Lacke + Farben AG**
**Glasuritstrasse 1**
**D-48165 Münster-Hiltrup (DE)**

(72) Erfinder: **Hintze-Brüning, Horst, Dr.**
**Haus Getter 27**
**D-4400 Münster (DE)**
Erfinder: **Hantschke, Bernhard**
**Kiebitzweg 6**
**D-4400 Münster (DE)**

(74) Vertreter: **Münch, Volker, Dr. et al**
**BASF Lacke + Farben AG**
**Patente/Lizenzen/Dokumentation**
**Postfach 61 23**
**D-48136 Münster (DE)**

**Beschreibung**

Die vorliegende Erfindung betrifft lufttrocknende Alkydharze, die hergestellt worden sind aus

a) 30 bis 80 Gew.-% Fettsäure

b) 5 bis 35 Gew.-% eines oder mehrerer Di- und/oder Polyole

c) 5 bis 30 Gew.-% einer oder mehrerer aromatischer und/ oder aliphatischer und/oder cycloaliphatischer Carbonsäuren mit mindestens 2 Carboxylgruppen bzw. deren veresterungsfähigen Derivaten und

d) 0 bis 20 Gew.-% einer oder mehrerer, bevorzugt aromatischer Monocarbonsäuren,

wobei die Summe der Gewichtsanteile der Komponenten a bis d jeweils 100 Gew.-% beträgt.

Gegenstand der vorliegenden Erfindung sind außerdem Beschichtungsmittel, die diese lufttrocknenden Alkydharze als Bindemittel enthalten sowie die Verwendung dieser Beschichtungsmittel für die Beschichtung von Holz und insbesondere als Bautenanstrichmittel.

Werden lufttrocknende Alkydharze als Bindemittel in Beschichtungsmitteln eingesetzt, so neigen die resultierenden Beschichtungen bei UV-Bestrahlung zu einer raschen Versprödung auf Grund von Nachvernetzungen zwischen den Polymerketten. Als Folge hiervon bilden sich kleinere Risse in der Filmoberfläche, die Ausgangs- punkte für größere Filmdefekte darstellen. Hieraus resultiert ein beschleunigter Filmabbau, der bis zur vollständigen Ablösung des Films vom Substrat führt. Besonders ausgeprägt ist dieser Effekt bei Substraten, die in Folge von Temperatur- und Luftfeuchte-einflüssen großen Dimensionsschwankungen unterliegen, z. B. Holz.

Um derartigen Schäden vorzubeugen, wird beispielsweise in der EP-A-237749 empfohlen, als Bindemittel Alkydharze aus rein aliphatischen Bestandteilen einzusetzen und zusätzlich den Beschichtungsmitteln lösliche Oxalsäurediamid-Derivate als Lichtschutzmittel zuzusetzen. Diese Beschichtungsmittel ergeben zwar Filme mit einer hohen UV-Beständigkeit, d. h. einer nur geringen Versprödungstendenz, jedoch weisen diese Systeme den Nachteil des hohen Preises von aliphatischen Dicarbonsäuren und der UV-Stabilisatoren auf, der einem breiten Einsatz solcher Systeme entgegensteht.

Ein anderer Lösungsweg besteht darin, plastifizierende Fettsäuren in das Alkydharz einzubauen, die eine höhere Anfangsflexibilität als konventionelle Alkydharze aufweisen und somit einen längeren Zeitraum benötigen, um denselben Grad der Versprödung zu erreichen.

Neben dem weit verbreiteten Einsatz von Fettsäuren pflanzlicher Herkunft ist es auch bekannt, Fischöle zum Aufbau der Alkydharze einzusetzen (vgl. z. B. Paintindia (1970) 20(4), Seite 19 ff: H. A. Bhatt, P.V. Tagdiwala: Studies in fish oil alkyds I; Paintindia (1970) 20(7); Seite 19 ff: H. A. Bhatt, P.V. Tagdiwala: Studies in fish oil alkyds II; Paintindia (1972) 22(1), Seite 19 ff: H. A. Bhatt, P.V. Tagdiwala: Studies in fish oil alkyds III). Werden diese Fischölalkyde als Bindemittel in Beschichtungs- mitteln eingesetzt, so zeigen die Beschichtungsmittel gute Trocknungseigenschaften und die resultierenden Filme weisen gute mechanische Eigenschaften auf. Nachteilig bei den herkömmlichen Fischölalkyden sind jedoch ihre hohe Farbzahl und ihr oft unangenehmer Geruch. Die Farbzahl kann zwar durch den Einsatz raffinierter Fischöle bzw. Fischölfettsäuren und durch den Einsatz geringer Mengen an $\alpha,\beta$-ungesättigten Dicarbonsäuren wie beispielsweise Maleinsäure reduziert werden (vgl. z. B. Paintindia (1970) 20 (7), Seite 19 ff: H. A. Bhatt P.V. Tagdiwala: Studies in fish oil alkyds II), die Ergebnisse sind jedoch für viele Anwendungen im Lacksektor, insbesondere für die Herstellung von weißpigmentierten Systemen und Lasuren noch unzureichend.

Der vorliegenden Erfindung lag somit die Aufgabe zugrunde, lufttrocknende Alkydharze zur Verfügung zu stellen, die beim Einsatz als Bindemittel in Beschichtungsmitteln zu Überzügen mit gegenüber konventionellen Alkydharz-Beschichtungsmitteln verbesserter UV-Stabilität, hohem Glanzgrad und Glanzstabilität sowie guten mechanischen Eigenschaften wie z. B. guter Flexibilität führen. Weiterhin sollten die diese lufttrocknenden Alkydharze enthaltenden Beschichtungsmittel eine hohe Trocknungsgeschwindigkeit, eine gute Durchtrocknung und eine niedrige Farbzahl aufweisen sowie insbesondere aus preiswerten und leicht verfügbaren Rohstoffen herstellbar sein.

Diese Aufgabe wird überraschenderweise durch lufttrocknende Alkydharze gelöst, die hergestellt worden sind aus

a) 30 bis 80 Gew.-% Fettsäure

b) 5 bis 35 Gew.-% eines oder mehrerer Di- und/oder Polyole

c) 5 bis 30 Gew.-% einer oder mehrerer aromatischer und/ oder aliphatischer und/oder cycloaliphatischer Carbonsäuren mit mindestens 2 Carboxylgruppen bzw. deren veresterungsfähigen Derivaten

d) 0 bis 20 Gew.-% einer oder mehrerer, bevorzugt aromatischer, Monocarbonsäuren,

wobei die Summe der Gewichtsanteile der Komponenten a bis d jeweils 100 Gew.-% beträgt.

Diese Alkydharze sind dadurch gekennzeichnet, daß

I.) die als Komponente a eingesetzte Fettsäure eine Mischung aus verschiedenen Fettsäuren ist und die Mischung

a$_1$) 10 bis 40 Gew.-% einer oder mehrerer gesättigter, kurzkettiger Fettsäuren mit 18 oder weniger C-Atomen pro Molekül,

a$_2$) 0 bis 25 Gew.-% einer oder mehrerer gesättigter, langkettiger Fettsäuren mit mehr als 18 C-Atomen pro Molekül,

a$_3$) 15 bis 40 Gew.-% Öl- und/oder Palmitoleinsäure

a$_4$) 0 bis 30 Gew.-% Linolsäure und

a$_5$) 10 bis 40 Gew.-% einer oder mehrerer anderer ungesättigter langkettiger Fettsäuren mit mindestens 20 C-Atomen pro Molekül und mit 1 bis 6 Doppelbindungen pro Molekül enthält, wobei die Summe der Gewichtsanteile der Komponenten a$_1$ bis a$_5$ jeweils 100 Gew.-% beträgt, und

II.) die Jodzahl der als Komponente a eingesetzten Fettsäuremischung zwischen 50 und 100 mg J$_2$/g, bevorzugt zwischen 70 und 90 mg J$_2$/g, liegt.

Gegenstand der vorliegenden Erfindung sind außerdem Beschichtungsmittel, die diese lufttrocknenden Alkyd- harze als Bindemittel enthalten, Verfahren zum Beschichten von Holz, bei denen diese Beschichtungsmittel eingesetzt werden sowie die Verwendung der Beschichtungsmittel als Bautenanstrichmittel sowie für die Beschichtung von Holz.

Es war überraschend und nicht vorhersehbar, daß die erfindungsgemäßen Alkydharze trotz Einsatz von Fettsäuren mit einer für die Herstellung von lufttrocknenden Alkydharzen niedrigen Jodzahl eine für den praktischen Einsatz zufriedenstellende Trocknungsgeschwindigkeit und Durchtrocknung aufweisen. Ebenso überraschend sind angesichts der hohen Anteile an gesättigten und trans-konfigurierten Fettsäuren im Alkydharz der hohe Glanzgrad und die guten mechanischen Eigenschaften von Filmen, die unter Verwendung der erfindungsgemäßen lufttrocknenden Alkydharze erhalten wurden. Überraschend und von besonderem Vorteil für den Einsatz der Alkydharze als Bindemittel in weißpigmentierten Systemen und Lasuren ist ferner auch die niedrige Farbzahl der Alkydharze. Ein wichtiger Vorteil dieser Alkydharze ist weiterhin die gute UV-Beständigkeit von Beschichtungen, die unter Verwendung dieser Alkydharze hergestellt wurden. Von wichtigem wirtschaftlichen Nutzen ist schließlich, daß dieses hohe Qualitätsniveau der diese lufttrocknenden Alkydharze enthaltenden Beschichtungsmittel mittels einer preisgünstigen Rohstoffbasis realisierbar ist.

Im folgenden sollen nun zunächst die einzelnen Komponenten zur Herstellung der erfindungsgemäßen Alkydharze näher erläutert werden.

Für die Herstellung der Alkydharze wird als erfindungswesentliche Komponente a eine Mischung verschiedener Fettsäuren in einer Menge von 30 bis 80 Gew.-%, bevorzugt 35 bis 60 Gew.-%, bezogen auf das Gesamtgewicht des Alkydharzes, eingesetzt. Die Mischung (Komponente a) enthält gesättigte und ungesättigte kurz- und langkettige Fettsäuren und weist Jodzahlen zwischen 50 und 100 mg J$_2$/g, bevorzugt zwischen 70 und 90 mg J$_2$/g auf. Die Fettsäuremischung enthält dabei

a$_1$) 10 bis 40 Gew.-%, bevorzugt 15 bis 30 Gew.-%, einer oder mehrerer gesättigter Fettsäuren mit 18 oder weniger C-Atomen pro Molekül,

a$_2$) 0 bis 25 Gew.-%, bevorzugt 4 bis 20 Gew.-%, einer oder mehrerer gesättigter langkettiger Fettsäuren mit mehr als 18 C-Atomen pro Molekül,

a$_3$) 15 bis 40 Gew.-%, bevorzugt 20 bis 30 Gew.-%, Öl- und/ oder Palmitoleinsäure

a$_4$) 0 bis 30 Gew.-%, bevorzugt 10 bis 20 Gew.-%, Linolsäure und

a$_5$) 10 bis 40 Gew.-%, bevorzugt 15 bis 30 Gew.-%, einer oder mehrerer anderer ungesättigter langkettiger Fettsäuren mit mindestens 20 C-Atomen pro Molekül und mit 1 bis 6 Doppelbindungen pro Molekül.

Selbstverständlich kann die als Komponente a eingesetzte Fettsäuremischung noch bis 30 Gew.-%, bezogen auf das Gesamtgewicht der Komponenten a$_1$-a$_5$, weiterer Fettsäuren enthalten. Je nach Anwendungszweck der Alkydharze können 0 bis 100 Gew.-%, bevorzugt 30 bis 100 Gew.-%, der Linolsäure auch in Form ihrer Isomeren mit konjugierten Doppelbindungen (9,11-Linolsäure) eingesetzt werden. Höhere Anteile an konjugierten Doppelbindungen erhöhen dabei die Trocknungsgeschwindigkeit, erniedrigen aber gleichzeitig die Bewitterungsbeständigkeit.

Bevorzugte Alkydharze werden erhalten, wenn die als Komponenten a$_3$ bis a$_5$ eingesetzten, ungesättigten Fettsäuren zu 20 bis 80 Gew.-% trans-konfigurierte Fettsäuren sind.

Die trans-konfigurierten und ein Teil der gesättigten Fettsäuren sind dabei über geeignete Verfahren erhältlich, z. B. der partiellen, katalytischen Hydrierung von natürlichen Fettsäuregemischen bzw. deren Estern, z. B. deren Triglyceriden. Die nichthydrierten Doppelbindungen isomerisieren dabei auf den - meist heterogenen - Katalysatoren zu den entsprechenden trans-Doppelbindungen unter Ausbildung eines bestimmten - von den Reaktionsbedingungen abhängigen - cis/ trans-Gleichgewichtes. Bevorzugt sind teilhydrierte Öle mit Anteilen langkettiger, gesättigter Fettsäuren mit bevorzugt 20 bis 24 C-Atomen mit Anteilen an mehrfach ungesättigten, längerkettigen Fettsäuren mit bevorzugt 20 bis 22 C-Atomen. Beispiele für geeignete Öle sind teilhydrierte/isomerisierte Rapsrüben - und Fischöle, wobei teilhydriertes isomerisiertes Fischöl bevorzugt eingesetzt wird. Diese teilhydrierten/isomerisierten Öle mit Jodzahlen bevorzugt zwischen 20 und 60 mg $J_2$/g sind zum Teil kommerziell erhältlich.

Beispiele für die als Komponente $a_1$ und $a_2$ geeignete gesättigte Fettsäuren sind die in pflanzlichen und seetierischen Ölen vorkommenden natürlichen Fettsäuren, wie z. B. Capronsäure, Caprylsäure, Caprinsäure, Laurinsäure, Myristinsäure, Palmitinsäure, Stearinsäure, Arachinsäure, Behensäure und Lignocerinsäure sowie Mischungen dieser Fettsäuren. Geeignet sind ferner auch synthetische Fettsäuren, wie z. B. Isononansäure und 2-Ethylhexylsäure sowie bei der Fettsäureveredlung anfallende Gemische verzweigter, gesättigter Fettsäuren. Selbstverständlich können auch Mischungen dieser genannten Fettsäuren eingesetzt werden. Auch die als Komponente $a_1$ und $a_2$ eingesetzten gesättigten Fettsäuren sind kommerziell verfügbar.

Zur Erzielung ausgewogener Lackeigenschaften werden die teilhydrierten Fettsäuregemische mit pflanzlichen Fettsäuregemischen oder deren Triglyceriden kombiniert, so daß eine Jodzahl von 50 bis 100 mg Jod/g, bevorzugt 70-90 mg Jod/g, erzielt wird. Bevorzugte pflanzliche Fettsäuregemische sind solche mit hohem Öl- und/oder Linolsäuregehalt und mit geringem, bevorzugt keinem Anteil an Linolensäure und an Harzsäuren wie z. B. Abietinsäure. Solche Fettsäuregemische werden bevorzugt aus Sonnenblumen-, Baumwollsaat-, raffiniertem Tall- und Sojaöl gewonnen und sind kommerziell erhältlich. Konjugiert ungesättigte Fettsäuren sind ebenfalls durch katalytische Isomerisierung oder durch Dehydratisierung aus Ricinolsäure zugänglich. Auch diese Verbindungen sind kommerziell verfügbar, beispielsweise unter den Handelsnamen "EDENOR UKD 5010" der Firma Henkel und "SYNOVRIN D12P" der Firma Akzo.

Die Fettsäuren können entweder direkt mit den Polyolen und Polycarbonsäuren verestert werden oder in Form ihrer Triglyceride mit Polyolen oder Polycarbonsäuren über Umesterungen ins Alkydharz eingebaut werden. Auch Kombinationen beider Verfahren sind möglich, wenn Fettsäuren beider Rohstoffquellen eingesetzt werden sollen.

Die für den Aufbau der Alkyharze als Komponente b in einer Menge von 5 bis 35 Gew.-%, bevorzugt 10 bis 25 Gew.-%, bezogen auf das Gewicht des Alkydharzes, eingesetzten Di- und/ oder Polyole sind bevorzugt aliphatische und/oder cycloaliphatische Alkohole mit 1 bis 6 OH-Gruppen und 1 bis 24 C-Atomen pro Molekül, z. B. Glykole wie Ethylen-, Propylen-, Neopentylglykol, 1,4-Butandiol, 2-Buten-1,4-diol, Hexandiol, 2,2,4-Trimethyl-1,3-pentandiol, 1,4-Dimethylolcyclohexan, Trimethylolpropanmonoallylether, Polyetherdiole wie Diethylenglykol, Triethylenglykol, Pentaerythritdiallylether, Triole wie Trimethylolpropan, Glycerin und deren ethoxylierte und propoxylierte Derivate, Tetrole wie Pentaerythrit, höhere Polyole wie Ditrimethylolpropan, Dipentaerythrit und Zuckeralkohole wie Mannit und Sorbit sowie deren ethoxylierte und propoxylierte Derivate.

Bevorzugt eingesetzt werden Pentaerythrit, Glycerin, Trimethylolpropan, Ditrimethylolpropan und Dipentaerythrit.

Zusammen mit den Fettsäuren (Komponente a) werden bei der Herstellung der Alkydharze noch 5 bis 30 Gew.-%, bevorzugt 15 bis 30 Gew.-%, bezogen auf das Gesamtgewicht des Alkydharzes, einer oder mehrerer aromatischer und/oder aliphatischer und/oder cycloaliphatischer Carbonsäuren mit mindestens 2 Carboxylgruppen bzw. deren veresterungsfähige Derivate (Komponente c) eingesetzt. Bevorzugt eingesetzt werden Di-, Tri-, und Tetracarbonsäuren mit 4 bis 12 C-Atomen pro Molekül oder deren veresterungsfähige Derivate wie beispielsweise die entsprechenden Anhydride und Ester. Beispiele für geeignete Carbonsäuren sind Phthalsäure, Isophthalsäure, Terephthalsäure, Tetra- und Hexahydrophthalsäure, Endomethylentetrahydrophthalsäure, Trimellithsäure, Pyromellithsäure, Maleinsäure, Bernsteinsäure, Glutarsäure, Adipinsäure sowie deren Anhydride, sofern sie existieren und deren alkylsubstituierte Derivate.

Bevorzugt eingesetzt werden Phthalsäure, Maleinsäure, Isophthalsäure und Hexahydrophthalsäure. Die Maleinsäure wird dabei bevorzugt zusammen mit anderen Carbonsäuren in einer Menge von 0,5 bis 2,0 Gew.-%, bezogen auf das Gewicht der Komponenten a bis d, eingesetzt.

Schließlich können beim Aufbau der Alkydharze noch 0 bis 20 Gew.-%, bevorzugt 0 bis 10 Gew.-%, bezogen auf das Gesamtgewicht des Alkydharzes, monofunktionelle, bevorzugt aromatische Carbonsäuren mitverestert werden, um einen erhöhten Anteil physikalischer Trocknung zu bewirken. Beispiele für geeignete Monocarbonsäuren sind Benzoesäure, alkylsubstituierte Benzoesäuren, Naphtensäuren und deren Isomeren, Abietinsäure und Dehydroabietinsäure sowie deren Isomeren.

Bevorzugt eingesetzt wird Benzoesäure.

Die Umsetzung der Komponenten a bis d zu den erfindungsgemäßen Alkyharzen erfolgt in bekannter Weise (vgl. z. B. EP-A-237749) in der Schmelze oder in organischen Lösungsmitteln bei Temperaturen zwischen 200 und 260 °C.

Die Öllänge der erfindungsgemäßen Alkydharze liegt vorzugsweise zwischen 30 und 60 Gew.%, besonders bevorzugt zwischen 35 und 50 Gew.-%, Fettsäuren (Komponente a), bezogen auf das erhaltene Alkydharz.

Die erfindungsgemäßen Alkydharze haben im allgemeinen Säurezahlen zwischen etwa 5 und 30 mg KOH/g und Hydroxylzahlen zwischen etwa 5 und 100 mg KOH/g. Die zahlenmittleren Molekulargewichte liegen üblicherweise zwischen 2.000 und 50.000 und die Viskositäten der 50 %igen Lösungen in Testbenzin betragen bei 23 °C bevorzugt 2 bis 10 dPas.

Für den Einsatz der erfindungsgemäßen Alkydharze in Beschichtungsmitteln werden die Alkydharze üblicherweise in aliphatischen und/oder aromatischen Lösungsmitteln bzw. Lösungsmittelgemischen angelöst. Beispiele für geeignete Lösungsmittel sind aromatische Kohlenwasserstoffe wie z. B. Xylol, Toluol, Solvent Napthta®, Schwerbenzol, verschiedene Solvesso®- Typen, verschiedene Shellsol®- Typen sowie aliphatische und cycloaliphatische Kohlenwasserstoffe, wie z. B. verschiedene Benzine, beispielsweise Testbenzin, welches einen Aromatenanteil von 19 bis 20 Gew.-% aufweist, Mineralterpentinöl, Tetralin und Dekalin.

Die unter Verwendung der erfindungsgemäßen Alkydharze hergestellten Beschichtungsmittel enthalten im allgemeinen 20 bis 90 Gew.-%, bezogen auf das Gesamtgewicht des Beschichtungsmittels, lufttrocknendes Alkydharz als Bindemittel (Komponente 1) und 5 bis 75 Gew.-%, bezogen auf das Gesamtgewicht des Beschichtungsmittels, organisches Lösungsmittel (Komponente 2).

Weiterhin können die Beschichtungsmittel noch 0 bis 50 Gew.-%, bezogen auf das Gesamtgewicht des Beschichtungsmittels, Pigmente und/oder Füllstoffe (Komponente 3) enthalten.

Die Pigmente können sowohl natürliche als auch synthetische, transparente und nichttransparente Pigmente sein. Bevorzugte transparente Pigmente sind Titandioxid und Eisenoxide. Als Füllstoffe eignen sich bevorzugt Silikate.

Schließlich enthalten die Beschichtungsmittel noch 0,01 bis 3,0 Gew.-%, bezogen auf das Gesamtgewicht des Beschichtungsmittels, Sikkative sowie ggf. weitere Hilfs- und Zusatzstoffe.

Beispiele für geeignete Trockenstoffe sind Metallsalze (cyclo)aliphatischer, natürlicher oder synthetischer Säuren, wie z. B. Linolsäure, Naphthensäure, Octansäure oder 2-Ethylhexansäure, wobei als geeignete Metalle Kobalt, Mangan, Blei, Zirkon, Calcium, Zink und Wismut zu nennen sind. Bevorzugt werden Mischungen von Sikkativen eingesetzt. Bezogen auf den Metallanteil werden die Trockenstoffe in einem Anteil von 0,001 bis etwa 3 Gew.-%, bezogen auf den Bindemittelfestkörper, verwendet.

Als weitere Hilfs- und Zusatzstoffe werden bevorzugt Hautverhinderungsmittel, Verlaufs- und Slipmittel und ggf. UV-Absorber eingesetzt.

Die Herstellung der Beschichtungsmittel erfolgt durch Mischen oder Dispergieren der erfindungsgemäßen Alkydharze mit Pigmenten, Füllstoffen, Hilfs- und Zusatzstoffen sowie Sikkativen.

Die Beschichtungsmittel können durch Spritzen, Fluten, Tauchen oder Streichen aufgebracht werden, wobei der Film anschließend bei Umgebungstemperatur zu einem festhaftenden Überzug härtet. Als zu beschichtendes Substrat kommt insbesondere Holz in Frage.

Gegenstand der vorliegenden Erfindung ist daher auch ein Verfahren zum Beschichten von Holz, das dadurch gekennzeichnet ist, daß die unter Verwendung der erfindungsgemäßen Alkydharze hergestellten Beschichtungsmittel eingesetzt werden.

Gegenstand der vorliegenden Erfindung ist schließlich auch die Verwendung dieser erfindungsgemäßen Beschichtungsmittel für die Beschichtung von Holz sowie die Verwendung als Bautenanstrichmittel.

Die vorliegende Erfindung wird in den folgenden Beispielen näher erläutert. Alle Angaben über Teile und Prozentsätze sind Gewichtsangaben, falls nicht ausdrücklich etwas anderes festgestellt wird.

## 1. Herstellung eines Alkydharzes 1

In einem mit Rührwerk, einer Stickstoffzuleitung und einer Trennvorlage ausgestatteten, temperierbaren Reaktor werden

24,3 Teile eines handelsüblichen, teilhydrierten Fischöls mit einer Verseifungszahl von 185 mg KOH/g, einer Jodzahl von 60 mg $J_2$/g, einem Schmelzpunkt von 42 °C, einem Gehalt an freier Fettsäure von < 1 % und einer Fettsäurezusammensetzung (bestimmt mittels GC-Anlalyse) von

7 % gesättigte Fettsäure mit 14 C-Atomen

22,4 % gesättigte Fettsäure mit 16 C-Atomen

10,5 % gesättigte Fettsäure mit 18 C-Atomen

3,5 % gesättigte Fettsäure mit 20 C-Atomen

3,0 % gesättigte Fettsäure mit 22 C-Atomen

6,7 % Palmitoleinsäure, wobei von den 6,7 % ca.4,0 % cis- und ca. 2,7 % trans-Fettsäure sind.

15,9 % Ölsäure, wobei von den 15,9 % ca. 9,5 % cis- und ca. 6,4 % trans-Fettsäure sind

17,6 % Fettsäure mit 22 C-Atomen und 1 bis 6 Doppelbindungen, wobei von den 17,6 % ca. 8,0 % cis- und ca. 9,6 % trans-Fettsäure sind

13,5 % Fettsäure mit 20 C-Atomen und 1 bis 6 Doppelbindungen, wobei von den 13,5 % ca. 5 % cis- und ca. 8,5 % trans-Fettsäuren sind

5,1 Teile Pentaerythrit und

0,03 Gew.-% Lithiumoctoat, bezogen auf das Gesamtgewicht (29,4 Teile) der Mischung aus Fischöl und Pentaerythrit,

so lange auf 260 °C erhitzt, bis die Umesterung beendet ist. Danach wird mit

13,6 Teilen einer handelsüblichen Sonnenblumenölfettsäure mit einer Säurezahl von 200 mg KOH/g, einer Verseifungszahl von 200 mg KOH/G, einer Jodzahl von ca. 120 mg $J_2$/g, einer Farbzahl (Gardner) von 2 und einer Fettsäurezusammensetzung von 16 % gesättigten Fettsäure mit 12 bis 18 C-Atomen

25 % Ölsäure (cis-Konfiguration)

58 % 9,12 Linolsäure (cis-Konfiguration) und 1 % Linolensäure (cis-Konfiguration)

5,7 Teilen Pentaerythrit

0,4 Teilen Maleinsäureanhydrid

16,9 Teilen Phthalsäureanhydrid und

3,5 Teilen Xylol als Schleppmittel zur Wasserauskreisung

die Polykondensation solange bei 205 °C durchgeführt, bis die Säurezahl des Alkyharzes 125 mg KOH/g beträgt und die Viskosität einer 50 %igen Lösung des Alkydharzes in Testbenzin bei 23 °C 2,6 dPa s beträgt. Das Harz wird mit Testbenzin angelöst, so daß der Festkörper ( 130 °C, 60 min) 65 % beträgt. Die Harzlösung 1 weist eine Farbzahl (Gardner) von 5 auf. Die Öllänge des erhaltenden Alkydharzes 1 beträgt 37,9 Gew.-% Fettsäuren, bezogen auf das Gesamtgewicht des Alkydharzes 1 (ohne Lösungmittel).

2. Herstellung eines Alkydharzes 2

In dem bei Herstellung des Alkydharzes 1 beschriebenen Reaktor werden

34,4 Teile eines handelsüblichen hellen Fischöls mit einer Verseifungszahl von 185 mg KOH/G, einer Jodzahl von 131 mg $J_2$/g, einem Gehalt an freien Fettsäuren < 1 %, einer Farbzahl (Gardner) von 10-11 und einer Fettsäurezusammensetzung von

8 % gesättigte Fettsäure mit 14 C-Atomen

13 % gesättigte Fettsäure mit 16 C-Atomen

1 % gesättigte Fettsäure mit 18 C-Atomen

14 % Palmitoleinsäure

14 % Ölsäure

1 % 9,12-Linolsäure

15 % Fettsäure mit 20 C-Atomen und 1 Doppelbindung

17 % Fettsäure mit 22 C-Atomen und 1 Doppelbindung

17 % Gemisch aus Fettsäuren mit 20 und 22 C-Atomen mit 2-6 Doppelbindungen pro Molekül

7,2 Teile Pentaerythrit und

0,03 % Lithiumoctoat, bezogen auf das Gesamtgewicht der Mischung (41,6 Teile) aus Fischöl und Pentaerythrit,

solange auf 260 °C erhitzt, bis die Umsetzung beendet ist.

Danach wird mit

20,7 Teilen einer handelsüblichen Mischung gesättigter Fettsäuren mit einer Verseifungszahl von 185 mg KOH/g, einer Säurezahl von 185 mg KOH/g, einer Jodzahl von ca. 5 mg $J_2$/g und einer Fettsäurezusammensetzung von

0,5 % gesättigte Fettsäure mit 14 C-Atomen

6,5 % gesättigte Fettsäure mit 16 C-Atomen

40,5 % gesättigte Fettsäure mit 18 C-Atomen

23,5 % gesättigte Fettsäure mit 20 C-Atomen

29,0 % gesättigte Fettsäure mit 22 C-Atomen

8,0 Teilen Pentaerythrit

0,6 Teilen Maleinsäureanhydrid

24,0 Teilen Phthalsäureanhydrid und

5,1 Teilen Xylol

solange bei 205 °C verestert, bis das Alkydharz 2 eine Säurezahl von 25 mg KOH/g und eine Viskosität von 4,0 dPas (gemessen 50 %ig in Testbenzin bei 23 °C) aufweist. Dann wird das Harz mit Testbenzin angelöst, so daß der Festkörper (130 °C, 60 min) 65 % beträgt. Die Harzlösung 2 weist eine Farbzahl (Gardner) von 7-8 auf. Die Öllänge des erhaltenen Alkydharzes 2 beträgt 53,7 Gew.-% Fettsäuren, bezogen

6

auf das Gesamtgewicht des Alkydharzes 2 (ohne Lösungsmittel).

3. Herstellung eines Alkydharzes 3

In dem bei der Herstellung des Alkydharzes 1 beschriebenen Reaktor werden
45,3 Teile eines handelsüblichen Fischöls mit einer Verseifungszahl von 185 mg KOH/g, einer Jodzahl von 135 mg $J_2$/g, einem Gehalt an freien Fettsäuren < 1 %, einer Farbzahl (Gardner) von 13-14 und einer Fettsäurezusammensetzung von
7 % gesättigte Fettsäure mit 14 C-Atomen
14 % gesättigte Fettsäure mit 16 C-Atomen
2 % gesättigte Fettsäure mit 18 C-Atomen
7 % Palmitoleinsäure
20 % Ölsäure
2 % 9,12-Linolsäure
12 % Fettsäure mit 20 C-Atomen und 1 Doppelbindung
17 % Fettsäure mit 22 C-Atomen und 1 Doppelbindung
19 % Gemisch aus Fettsäuren mit 20 und 22 C-Atomen und 2-6 Doppelbindungen pro Molekül
7,2 Teile Pentaerythrit
0,03 % Lithiumoctoat, bezogen auf das Gesamtgewicht der Mischung (52,5 Teile) aus Fischöl und Pentaerythrit, so lange auf 260 °C erhitzt, bis die Umsetzung beeindet ist.
Danach wird mit
9,2 Teilen der bei der Herstellung des Alkydharzes 1 beschriebenen Sonnenblumenölfettsäure (Jodzahl ca. 120 mg $J_2$/g)
7,2 Teilen Pentaerythrit
0,6 Teilen Maleinsäureanhydrid
25,3 Teilen Phthalsäureanhydrid und
5,2 Teilen Xylol
solange bei 205 °C verestert, bis das Alkydharz 3 eine Säurezahl von 25 mg KOH/g und eine Viskosität von 3,8 dPas (gemessen 50 %ig in Testbenzin bei 23 °C) aufweist. Dann wird das Harz 3 mit Testbenzin angelöst, so daß der Festkörper (130 °C, 60 min) 65 % beträgt. Die Harzlösung 3 weist eine Farbzahl (Gardner) von 9 auf. Die Öllänge des Alkydharzes 3 beträgt 54,5 Gew.-% Fettsäuren, bezogen auf das Gesamtgewicht des Alkydharzes 3 (ohne Lösungsmittel).

4. Herstellung eines Alkydharzes 4

In dem bei der Herstellung des Alkydharzes 1 beschriebenen Reaktor werden
52,5 Teile einer handelsüblichen destillierten Fischölfettsäure mit einer Verseifungszahl von 180 mg KOH/g, einer Säurezahl von 180 mg KOH/g, einer Jodzahl von 182 mg $J_2$/g, einer Farbzahl (Gardner) von 9-10 und einer Fettsäurezusammensetzung von
1 % gesättigte Fettsäure mit 14 C-Atomen
6 % gesättigte Fettsäure mit 16 C-Atomen
3 % gesättigte Fettsäure mit 18 C-Atomen
1 % gesättigte Fettsäure mit 20 C-Atomen
2 % gesättigte Fettsäure mit 22 C-Atomen
2 % Palmitoleinsäure
13 % Ölsäure
4,5 % 9,12-Linolsäure
17 % Fettsäure mit 20 C-Atomen und 1 Doppelbindung
31 % Fettsäure mit 22 C-Atomen und 1 Doppelbindung
19,5 % Gemisch aus Fettsäuren mit 20 und 22 C-Atomen und 2-6 Doppelbindungen pro Molekül
14,9 Teilen Pentaerythrit
3,3 Teilen Glycerin
0,6 Teilen Maleinsäureanhydrid
23,4 Teilen Phthalsäureanhydrid und
5,2 Teile Xylol
solange bei 220 °C verestert, bis das Alkydharz 4 eine Säurezahl von 13 mg KOH/g und eine Viskosität von 2,4 dPas (50 %ig in Testbenzin bei 23 °C) aufweist. Dann wird das Harz mit Testbenzin angelöst, so daß der Fest-körper (130 °C, 60 min) 65 % beträgt. Die Harzlösung 4 weist eine Farbzahl (Gardner) von

EP 0 407 796 B1

7 + auf. Die Öl- länge des Alkydharzes 4 beträgt 52,5 Gew.-% Fettsäu- ren, bezogen auf das Gesamtgewicht des Alkydharzes 4 (ohne Lösungsmittel).

5. Herstellung eines Alkydharzes 5

In dem bei der Herstellung des Alkydharzes 1 beschriebenen Reaktor werden

34,9 Teile des bei der Herstellung des Alkydharzes 3 beschriebenen Fischöls (Jodzahl 135 mg $J_2$/g)

7,3 Teile Pentaerythrit und

0,03 % Lithiumoctoat, bezogen auf das Gesamtgewicht der Mischung (42,2 Teile) aus Fischöl und Pentaerythrit, solange auf 260 °C erhitzt, bis die Umsetzung beendet ist.

Danach wird mit

19,5 Teilen einer handelsüblichen Tallölfettsäure mit einer Verseifungszahl von 195 mg KOH/g, einer Säurezahl von 195 mg KOH/g, einer Jodzahl von 150 mg $J_2$/g, einer Farbzahl (Gardner) von 4 und einer Fettsäurezusammensetzung von

3,0 % gesättigten Fettsäuren mit weniger als 18 C-Atomen

30,0 % Ölsäure

63,0 % Linolsäure ($\geqq$ 85 % 9,12 Linolsäure und der Rest 9,11 Linolsäure) sowie andere höher ungesättigte Fettsäuren

1,8 % Harzsäuren, wie z. B. Abietinsäure und Isomere

2,0 % unverseifbare Anteile

8,2 Teilen Pentaerythrit

0,6 Teilen Maleinsäureanhydrid

24,3 Teilen Phthalsäureanhydrid und

5,2 Teilen Xylol

bei 205 °C so lange verestert, bis das Alkydharz 5 eine Säurezahl von 22 mg KOH/g und eine Viskosität von 3,2 dPas (50 %ig in Testbenzin bei 23 °C) aufweist. Dann wird das Harz 5 mit Testbenzin angelöst, so daß der Festkörper (130 °C, 60 min) 65 % beträgt. Die Harzlösung 5 weist eine Farbzahl (Gardner) von 7 auf. Die Öllänge des Alkydharzes 5 beträgt 52,9 Gew.-% Fettsäuren, bezogen auf das Gesamtgewicht des Alkydharzes 5 (ohne Lösungsmittel).

6. Herstellung eines Alkydharzes 6

In dem bei der Herstellung des Alkydharzes 1 beschriebenen Reaktor werden

35,4 Teile der bei der Herstellung des Alkydharzes 5 beschriebenen Tallölfettsäure

Jodzahl 150 mg $J_2$/g)

12,3 Teile Pentaerythrit

15,3 Teile Phthalsäureanhydrid und

5,0 Teile Xylol

so lange bei 220 °C verestert, bis das Alkydharz 6 eine Säurezahl von 15 mg KOH/g und eine Viskosität von 3,0 dPas (50 %ig in Testbenzin bei 23 °C) aufweist. Dann wird das Harz mit Testbenzin angelöst, so daß der Festkörper (130 °C, 60 min) 65 % beträgt. Die Harzlösung 6 weist eine Farbzahl (Gardner) von 7 auf. Das Alkydharz 6 weist eine Öllänge von 35,4 Gew.-% Fettsäure, bezogen auf das Gesamtgewicht des Alkydharzes 6 (ohne Lösungsmittel) auf.

Beispiele 1 und 2 sowie Vergleichsbeispiele 1 bis 4

Die Alkydharzlösungen 1 und 2 (Beispiele 1 und 2) bzw. 3 bis 6 (Vergleichsbeispiele 1 bis 4) werden mit 0,031 % Methylethylketoxim, bezogen auf den Festkörpergehalt (65 %) der Alkydharzlösungen, und Trockenstoff versetzt. Als Trockenstoff wird dabei eine Mischung aus Cobalt-, Zirkon- , und Calciumoctoat, gelöst in Testbenzin, eingesetzt. Die Menge an Trockenstoffen wird dabei entsprechend einem Ge- halt von 0,005 % Cobalt, 0,079 % Zirkon und 0,123 % Calcium, jeweils bezogen auf den Festkörpergehalt (65 %) der Alkydharzlösungen 1 bis 6, gewählt. Die so erhaltenen sikkativierten Alkydharzlösungen werden auf Glasplatten gerakelt (Naßfilmstärke 500 $\mu$m) und 15h bei 20 °C getrocknet.

Anschließend wird die Durchtrocknung beurteilt, indem untersucht wird, bis zu welcher Schichtdicke Sandkörner, die auf einem mit einem Linoleumschneider erzeugten Profilschnitt gestreut werden, nicht an den offengelegten Oberflächen des Profils haften bleiben. Außerdem wird die Filmfestigkeit durch eine manuell erzeugte Druck- und Scherbeanspruchung ("Daumentest") getestet. Bei sehr hoher Filmfestigkeit (Note 0-1) kann der Film praktisch nicht deformiert werden. Die Prüfergebnisse sind in Tabelle 1 dargestellt.

Beispiele 3 und 4 sowie Vergleichsbeispiele 5 bis 8

Die Alkydharze 1 und 2 (Beispiele 3 und 4) sowie die Alkydharze 3 bis 6 (Vergleichsbeispiele 5 bis 8) werden mit 55 % eines handelsüblichen Titandioxid-Pigments (Rutil-Typ) mit einer mittleren Teilchengröße von 0,4 μm, 5,5 % eines handelsüblichen Mattierungsmittels auf Basis von Siliciumdioxid mit einer mittleren Teilchengröße von 5 μm, 1,5 % einer handelsüblichen Silikonlösung, 4,4 % eines handelsüblichen, gelben, transparenten Eisenoxidpigments, 0,25 % eines handelsüblichen roten, transparenten Eisenoxidpigments, 0,1 % eines handelsüblichen, schwarzen Eisenoxidpigments, 2,7 % Methylethylketoxim sowie handelsüblichen Trockenstoffen versetzt. Alle Prozentangaben beziehen sich dabei auf den Festkörpergehalt 65 % der Alkydharzlösungen 1 bis 6. Als Trockenstoff wird eine Mischung aus Calcium-, Zirkon- und Cobaltoktoat, jeweils gelöst in Testbenzin, eingesetzt. Die Menge an Trockenstoffen wird dabei entsprechend einem Gehalt von 0,56 % Calcium, 0,21 % Zirkon und 0,05 % Cobalt, jeweils bezogen auf den Festkörpergehalt (65 %) der Alkyd- harzlösungen 1 bis 6, gewählt. Anschließend werden die Lasuren mit Testbenzin auf einen Festkörper von 60 % ( 130 °C, 60 min) eingestellt.

Die erhaltenen Lasuren 1 bis 6 werden mit einer Naßfilmstärke von 300 μm auf Glasplatten aufgerakelt und 2 Tage bei 20 °C getrocknet. Anschließend wird der Glanzgrad und der Farbton der resultierenden Beschichtung beurteilt. Die Ergebnisse sind in Tabelle 2 dargestellt.

Weiterhin werden mit den Lasuren 1, 3 und 6 nach dem Airless-Spritzverfahren Paneele beschichtet (Naßfilmstärke ca. 350 μm) und bei Raumtemperatur getrocknet. Diese beschichteten Paneelen wurden anschließend 6 Monate in Florida (Breitengrad 45, Süd) bewittert. Danach werden gemäß DIN 53230 der relative Oberflächenabbau der Beschichtungen sowie die Riss- und Blasenbildung und die Abplatzungen beurteilt. Die Ergebnisse sind in Tabelle 3 dargestellt.

Schließlich werden aus den Lasuren 1 bis 6 freie Filme (Schichtdicke 150 μm) nach bekannten Methoden (z. B. Aufrakeln auf Polyethylenplatten) hergestellt. Diese Filme werden 14 Tage lang bei 25 °C mit 6 Lampen im Abstand von 40 cm mit sichtbarem und UV-Licht bestrahlt (handelsübliches Besonnungsgerät "Ultravidalux"-Lampen der Firma OSRAM). Zum Vergleich werden freie Filme aus den Lasuren 1 bis 6 statt der Bestrahlung 14 Tage lang bei 25 °C im Dunkeln gelagert.

Zehn Stunden nach beendeter Bestrahlung bzw. Lagerung im Dunkeln wird die Elastizität der bestrahlten Filme durch einen Biegetest nach DIN 53 230 bewertet (Biegung der Filme um 8 mm starke Rundstäbe) und mit der Elastizität der unbelasteten Filmen verglichen. Die Ergebnisse sind in Tabelle 4 dargestellt.

**Tabelle 1:** Trocknungsverhalten der Alkydharze

| Beispiel | Alkyd harz | Jodzahl Fett-säure (mg $J_2$/g) | Öllänge [2] (Gew.-%) | Durchtrocknung ($\mu$m) | Filmfestigkeit [3] |
|---|---|---|---|---|---|
| 1 | 1 | 81,5 | 37,9 | 420 | 2 |
| 2 | 2 | 83,7 | 53,7 | 450 | 2+ |
| V1[1] | 3 | 132,5 | 54,5 | 330 | 1 |
| V2[1] | 4 | 182 | 52,5 | 230 | 3 |
| V3[1] | 5 | 141 | 52,9 | 320 | 2+ |
| V4[1] | 6 | 150 | 35,4 | 200 | 2- |

[1] V=Vergleichsbeispiel

[2] Die Öllänge gibt den Anteil an Fettsäuren (Komponente a) in Gew.-%, bezogen auf das Gesamtgewicht des Alkydharzes, an.

[3] 0=beste Note, 5=schlechteste Note

EP 0 407 796 B1

**Tabelle 2:** Glanz und Farbton von auf Glasplatten aufgetragenen und getrockneten Lasuren

| Beispiel | Alkydharz | Glanzgrad (60 °) in % | Farbzahl (Gardner) Alkydharz | Farbton Lasur visuell [2] |
|---|---|---|---|---|
| 3 | 1 | 51 | 5 | 0 |
| 4 | 2 | 34 | 7-8 | 0-1 |
| V5[1] | 3 | 47 | 9 | 2 |
| V6[1] | 4 | 30 | 7+ | 1 |
| V7[1] | 5 | 45 | 8 | 1 |
| V8[1] | 6 | 47 | 7 | 2-3 |

[1] V = Vergleich

[2] Notenskala 0-5 : 0 = farblos, 5 = dunkel

EP 0 407 796 B1

**Tabelle 3:** Bewitterungsbeständigkeit der Lasuren

| Beispiel | Alkydharz | Öllänge (Gew.-%)[2] | Oberflächenabbau %[2] | Risse/Blasen/Abplatzungen | |
|---|---|---|---|---|---|
| | | | | Flächen | Kanten |
| 3 | 1 | 37,9 | 0,5 | 1 | 0 |
| V5[1] | 3 | 54,5 | 0,5 | 1 | 0 |
| V8[1] | 6 | 35,4 | 3,0 | 2-3 | 3 |

[1] V Vergleich

[2] Die Öllänge gibt den Anteil an Fettsäuren (Komponente a) in Gew.-%, bezogen auf das Gesamtgewicht des Alkydharzes, an.

[3] 0 % = kein Abbau; 100 % = völliger Abbau

EP 0 407 796 B1

Tabelle 4

| Elastizität nach UV-Belastung | | | | |
|---|---|---|---|---|
| Beispiel | Alkydharz | Lasur | Biegetest nach UV[2] | Biegetest ohneUV[3] |
| 3 | 1 | 1 | 2 | 0 |
| 4 | 2 | 2 | 2-3 | 0-1 |
| V5 | 3 | 3 | 3 | 0-1 |
| V6 | 4 | 4 | 3 | 1 |
| V7 | 5 | 5 | 3-4 | 1 |
| V8 | 6 | 6 | 4 | 2-3 |

[1] V = Vergleich

[2] Biegetest der gealterten Filme nach UV-Bestrahlung; Notenskala 0-5 : 0 = auch bei mehrmaligem schnellen Biegen keine Filmbeschädigung; 5 = keinerlei mechanische Biegung ohne vollständige Filmzerstörung möglich

[3] Biegetest an unbelasteten Filmen; Notenskala 0-5 analog zum Biegetest der gealterten Filme

Die Beispiele 1 bis 4 und die Vergleichsbeispiele 1 bis 8 zeigen, daß die Beschichtungsmittel auf Basis der erfindungsgemäßen Alkydharze 1 und 2 trotz ihrer niedrigen Jodzahl (=halbtrocknende Fettsäuremischung) vergleichbare, bzw. bessere Trocknungseigenschaften und Filmfestigkeiten aufweisen als vergleichbare Alkydharze mit höheren Jodzahlen. Weiterhin zeichnen sich die Alkydharze 1 und 2 sowie die aus ihnen hergestellten Beschichtungsstoffe durch eine sehr niedrige Farbzahl aus.

Die Bewitterungsbeständigkeit des auf das Alkydharze 1 basierenden Beschichtungsmittels ist deutlich höher als die auf rein pflanzlicher Fettsäurebasis basierender Alkyharze.

Sie entspricht in etwa der von Beschichtungsmitteln auf herkömmlicher Fischölbasis (V5).

Dem entsprechen auch die Ergebnisse der im Labor durchgeführten UV-Bestrahlungsversuche. Die plastifizierende Wirkung der langkettigen Fettsäuren führt in Verbindung mit der niedrigen Jodzahl zu einer erhöhten Flexibilität der freien Filme.

Die erfindungsgemäßen Alkydharze ermöglichen somit die preiswerte Herstellung von schnelltrocknenden Beschichtungsmitteln, die Filme mit sehr guten mechanischen Eigenschaften - insbesondere nach UV-Bewitterung - und geringen Farbzahlen ergeben, so daß ihr bevorzugter Einsatz im Bereich von transparenten Lasuren und weiß pigmentierten Systemen liegt.

## Patentansprüche

**Patentansprüche für folgende Vertragsstaaten : AT, BE, CH, DE, DK, FR, GB, IT, LI, NL, SE**

1. Lufttrocknende Alkydharze, die hergestellt worden sind aus

    a) 30 bis 80 Gew.-% Fettsäure

    b) 5 bis 35 Gew.-% eines oder mehrerer Di- und/oder Polyole

    c) 5 bis 30 Gew.-% einer oder mehrerer aromatischer und/oder aliphatischer und/oder cycloaliphatischer Carbonsäuren mit mindestens 2 Carboxylgruppen bzw. deren veresterungsfähigen Derivaten und

    d) 0 bis 20 Gew.-% einer oder mehrerer, bevorzugt aromatischer, Monocarbonsäuren,

    wobei die Summe der Gewichtsanteile der Komponenten a bis d jeweils 100 Gew.-% beträgt, dadurch gekennzeichnet, daß

    I.) die als Komponente a eingesetzte Fettsäure eine Mischung aus verschiedenen Fettsäuren ist und die Mischung

    $a_1$) 10 bis 40 Gew.-% einer oder mehrerer gesättigter, kurzkettiger Fettsäuren mit 18 oder weniger C-Atomen pro Molekül,

    $a_2$) 0 bis 25 Gew.-% einer oder mehrerer gesättigter, langkettiger Fettsäuren mit mehr als 18 C-Atomen pro Molekül,

    $a_3$) 15 bis 40 Gew.% Öl- und/oder Palmitoleinsäure

    $a_4$) 0 bis 30 Gew.-% Linolsäure und

    $a_5$) 10 bis 40 Gew.-% einer oder mehrerer anderer ungesättigter langkettiger Fettsäuren mit mindestens 20 C-Atomen pro Molekül und mit 1 bis 6 Doppelbindungen pro Molekül enthält, wobei die Summe der Gewichtsanteile der Komponenten $a_1$ bis $a_5$ jeweils 100 Gew.-% beträgt,

13

EP 0 407 796 B1

und

II.) die Jodzahl der als Komponente a eingesetzten Fettsäuremischung zwischen 50 und 100 mg $J_2$/g liegt.

2.  Lufttrocknende Alkydharze nach Anspruch 1, dadurch gekennzeichnet, daß die als Komponente a eingesetzte Mischung von Fettsäuren

$a_1$) 15 bis 30 Gew.-% einer oder mehrerer gesättigter, kurzkettigen Fettsäuren mit 18 oder weniger C-Atomen pro Molekül,

$a_2$) 4 bis 20 Gew.-% einer oder mehrerer gesättigter, langkettiger Fettsäuren mit mehr als 18 C-Atomen pro Molekül,

$a_3$) 20 bis 30 Gew.-% Ölsäure und/oder Palmitoleinsäure

$a_4$) 10 bis 20 Gew.-% Linolsäure und

$a_5$) 15 bis 30 Gew.-% einer oder mehrerer anderer ungesättigter langkettiger Fettsäuren mit mindestens 20 C-Atomen pro Molekül und mit 1 bis 6 Doppelbindungen pro Molekül

enthält, wobei die Summe der Gewichtsanteile der Komponenten $a_1$ bis $a_5$ jeweils 100 Gew.-% beträgt,

3.  Lufttrocknende Alkydharze nach Anspruch 1 oder 2, dadurch gekennzeichnet, daß die als Komponenten $a_3$ bis $a_5$ eingesetzten ungesättigten Fettsäuren zu 20 bis 80 Gew.-% trans-konfigurierte Fettsäuren sind.

4.  Lufttrocknende Alkydharze nach einem der Ansprüche 1 bis 3, dadurch gekennzeichnet, daß die als Komponente $a_4$ eingesetzte Linolsäure zu 30 bis 100 Gew.-% aus der 9,11-Linolsäure mit konjugierten Doppelbindungen besteht.

5.  Lufttrocknende Alkydharze nach einem der Ansprüche 1 bis 4, dadurch gekennzeichnet, daß die als Komponenten $a_2$ und $a_5$ eingesetzten, längerkettigen Fettsäuren aus teilhydrierten Fischölen mit Jodzahlen von 30 bis 70 mg $J_2$/g stammen.

6.  Lufttrocknende Alkydharze nach einem der Ansprüche 1 bis 5, dadurch gekennzeichnet, daß die Öllänge der Alkydharze 30 bis 60 Gew.-%, bevorzugt 35 bis 50 Gew.-%, Fettsäure (Komponente a), bezogen auf das Gesamtgewicht des Alkydharzes, beträgt.

7.  Lufttrocknende Alkydharze nach einem der Ansprüche 1 bis 6, dadurch gekennzeichnet, daß zum Aufbau der Alkydharze 0,5 bis 2,0 Gew.-%, bezogen auf das Gewicht der Komponenten a bis d, Maleinsäure bzw. Maleinsäureanhydrid mitverwendet wird.

8.  Lufttrocknende Alkydharze nach einem der Ansprüche 1 bis 7, dadurch gekennzeichnet, daß 10 bis 90 Gew.-% der als Komponente d eingesetzten Monocarbonsäure Benzoesäure ist.

9.  Beschichtungsmittel auf der Basis lufttrocknender Alkydharze, dadurch gekennzeichnet, daß das Beschichtungsmittel lufttrocknende Alkydharze nach einem der Ansprüche 1 bis 8 als Bindemittel enthält.

10. Beschichtungsmittel nach Anspruch 9, dadurch gekennzeichnet, daß das Beschichtungsmittel

1.) 20 bis 90 Gew.-% lufttrocknende Alkydharze als Bindemittel,

2.) 5 bis 75 Gew.-% eines oder mehrerer organischer Lösungsmittel

3.) 0 bis 50 Gew.-% Pigmente und/oder Füllstoffe und

4.) 0,01 bis 3,0 Gew.-% Sikkative und ggf. weitere Hilfs- und Zusatzstoffe enthält, wobei die Summe der Gewichtsanteile der Komponenten 1 bis 4 jeweils 100 Gew.-% beträgt.

11. Verfahren zum Beschichten von Holz, bei dem ein lufttrocknendes Beschichtungsmittel aufgebracht und getrocknet wird, dadurch gekennzeichnet, daß ein Beschichtungsmittel nach Anspruch 9 oder 10 eingesetzt wird.

12. Verwendung der Beschichtungsmittel nach Anspruch 9 oder 10 als Bautenanstrichmittel.

13. Verwendung der Beschichtungsmittel nach Anspruch 9 oder 10 für die Beschichtung von Holz.

14

EP 0 407 796 B1

**Patentansprüche für folgenden Vertragsstaat : ES**

1. Verfahren zur Herstellung lufttrocknender Alkydharze, bei dem
   a) 30 bis 80 Gew.-% Fettsäure
   b) 5 bis 35 Gew.-% eines oder mehrerer Di- und/oder Polyole
   c) 5 bis 30 Gew.-% einer oder mehrerer aromatischer und/oder aliphatischer und/oder cycloaliphatischer Carbonsäuren mit mindestens 2 Carboxylgruppen bzw. deren veresterungsfähige Derivate und
   d) 0 bis 20 Gew.-% einer oder mehrerer, bevorzugt aromatischer, Monocarbonsäuren,
   miteinander umgesetzt werden, wobei die Summe der Gewichtsanteile der Komponenten a bis d jeweils 100 Gew.-% beträgt, dadurch gekennzeichnet, daß
   I.) die als Komponente a eingesetzte Fettsäure eine Mischung aus verschiedenen Fettsäuren ist und die Mischung
   $a_1$) 10 bis 40 Gew.-% einer oder mehrerer gesättigter, kurzkettiger Fettsäuren mit 18 oder weniger C-Atomen pro Molekül,
   $a_2$) 0 bis 25 Gew.-% einer oder mehrerer gesättigter, langkettiger Fettsäuren mit mehr als 18 C-Atomen pro Molekül,
   $a_3$) 15 bis 40 Gew.-% Öl- und/oder Palmitoleinsäure
   $a_4$) 0 bis 30 Gew.-% Linolsäure und
   $a_5$) 10 bis 40 Gew.-% einer oder mehrerer anderer ungesättigter langkettiger Fettsäuren mit mindestens 20 C-Atomen pro Molekül und mit 1 bis 6 Doppelbindungen pro Molekül
   enthält, wobei die Summe der Gewichtsanteile der Komponenten $a_1$ bis $a_5$ jeweils 100 Gew.-% beträgt, und
   II.) die Jodzahl der als Komponente a eingesetzten Fettsäuremischung zwischen 50 und 100 mg $J_2$/g liegt.

2. Verfahren nach Anspruch 1, dadurch gekennzeichnet, daß die als Komponente a eingesetzte Mischung von Fettsäuren
   $a_1$) 15 bis 30 Gew.-% einer oder mehrerer gesättigter, kurzkettiger Fettsäuren mit 18 oder weniger C-Atomen pro Molekül,
   $a_2$) 4 bis 20 Gew.-% einer oder mehrerer gesättigter, langkettiger Fettsäuren mit mehr als 18 C-Atomen pro Molekül,
   $a_3$) 20 bis 30 Gew.-% Ölsäure und/oder Palmitoleinsäure
   $a_4$) 10 bis 20 Gew.-% Linolsäure und
   $a_5$) 15 bis 30 Gew.-% einer oder mehrerer anderer ungesättigter, langkettiger Fettsäuren mit mindestens 20 C-Atomen pro Molekül und mit 1 bis 6 Doppelbindungen pro Molekül
   enthält, wobei die Summe der Gewichtsanteile der Komponenten $a_1$ bis $a_5$ jeweils 100 Gew.-% beträgt.

3. Verfahren nach Anspruch 1 oder 2, dadurch gekennzeichnet, daß die als Komponenten $a_3$ bis $a_5$ eingesetzten ungesättigten Fettsäuren zu 20 bis 80 Gew.-% trans-konfigurierte Fettsäuren sind.

4. Verfahren nach einem der Ansprüche 1 bis 3, dadurch gekennzeichnet, daß die als Komponente $a_4$ eingesetzte Linolsäure zu 30 bis 100 Gew.-% aus der 9,11-Linolsäure mit konjugierten Doppelbindungen besteht.

5. Verfahren nach einem der Ansprüche 1 bis 4, dadurch gekennzeichnet, daß die als Komponenten $a_2$ und $a_5$ eingesetzten, längerkettigen Fettsäuren aus teilhydrierten Fischölen mit Jodzahlen von 30 bis 70 mg $J_2$/g stammen.

6. Verfahren nach einem der Ansprüche 1 bis 5, dadurch gekennzeichnet, daß die Öllänge der Alkydharze 30 bis 60 Gew.-%, bevorzugt 35 bis 50 Gew.-%, Fettsäure (Komponente a), bezogen auf das Gesamtgewicht des Alkydharzes, beträgt.

7. Verfahren nach einem der Ansprüche 1 bis 6, dadurch gekennzeichnet, daß zum Aufbau der Alkydharze 0,5 bis 2,0 Gew.-%, bezogen auf das Gewicht der Komponenten a bis d, Maleinsäure bzw. Maleinsäureanhydrid mitverwendet wird.

8. Verfahren nach einem der Ansprüche 1 bis 7, dadurch gekennzeichnet, daß 10 bis 90 Gew.-% der als Komponente d eingesetzten Monocarbonsäure Benzoesäure ist.

15

**9.** Verfahren zur Herstellung von Beschichtungsmitteln auf der Basis lufttrocknender Alkydharze, dadurch gekennzeichnet, daß das Beschichtungsmittel lufttrocknende Alkydharze, die nach einem Verfahren nach einem der Ansprüche 1 bis 8 hergestellt worden sind, als Bindemittel enthält.

**10.** Verfahren nach Anspruch 9, dadurch gekennzeichnet, daß das Beschichtungsmittel
1.) 20 bis 90 Gew.-% lufttrocknende Alkydharze als Bindemittel,
2.) 5 bis 75 Gew.-% eines oder mehrerer organischer Lösungsmittel,
3.) 0 bis 50 Gew.-% Pigmente und/oder Füllstoffe und
4.) 0,01 bis 3,0 Gew.-% Sikkative und ggf. weitere Hilfs- und Zusatzstoffe
enthält, wobei die Summe der Gewichtsanteile der Komponenten 1 bis 4 jeweils 100 Gew.-% beträgt.

**11.** Verfahren zum Beschichten von Holz, bei dem ein lufttrocknendes Beschichtungsmittel aufgebracht und getrocknet wird, dadurch gekennzeichnet, daß ein Beschichtungsmittel, das nach Anspruch 9 oder 10 hergestellt worden ist, eingesetzt wird.

**12.** Verwendung der Beschichtungsmittel, die nach Anspruch 9 oder 10 hergestellt worden sind, als Bautenanstrichmittel.

**13.** Verwendung der Beschichtungsmittel, die nach Anspruch 9 oder 10 hergestellt worden sind, für die Beschichtung von Holz.

**Claims**
**Claims for the following Contracting States : AT, BE, CH, DE, DK, FR, GB, IT, LI, NL, SE**

**1.** Air-drying alkyd resins which have been prepared from
a) from 30 to 80 % by weight of fatty acid
b) from 5 to 35 % by weight of one or more di- and/or polyols
c) from 5 to 30 % by weight of one or more aromatic and/or aliphatic and/or cycloaliphatic carboxylic acids having at least 2 carboxyl groups, or esterifiable derivatives thereof, and
d) from 0 to 20 % by weight of one or more, preferably aromatic monocarboxylic acids,
the sum of the proportions by weight of components a to d being in each case 100 % by weight, characterized in that
I.) the fatty acid employed as component a is a mixture of different fatty acids and the mixture contains
$a_1$) from 10 to 40 % by weight of one or more saturated, short-chain fatty acids having 18 or fewer carbon atoms per molecule,
$a_2$) from 0 to 25 % by weight of one or more saturated, long-chain fatty acids with more than 18 carbon atoms per molecule,
$a_3$) from 15 to 40 % by weight of oleic and/or palmitoleic acid
$a_4$) from 0 to 30 % by weight of linoleic acid, and
$a_5$) from 10 to 40 % by weight of one or more other unsaturated, long-chain fatty acids having at least 20 carbon atoms per molecule and having from 1 to 6 double bonds per molecule, the sum of the proportions by weight of components $a_1$ to $a_5$ being in each case 100 % by weight, and
II.) the iodine number of the fatty acid mixture employed as component a is between 50 and 100 mg of $I_2$/g.

**2.** Air-drying alkyd resins according to Claim 1, characterized in that the mixture of fatty acids employed as component a contains
$a_1$) from 15 to 30 % by weight of one or more saturated, short-chain fatty acids having 18 or fewer carbon atoms per molecule,
$a_2$) from 4 to 20 % by weight of one or more saturated, long-chain fatty acids with more than 18 carbon atoms per molecule,
$a_3$) from 20 to 30 % by weight of oleic and/or palmitoleic acid
$a_4$) from 10 to 20 % by weight of linoleic acid, and
$a_5$) from 15 to 30 % by weight of one or more other unsaturated, long-chain fatty acids having at least 20 carbon atoms per molecule and having from 1 to 6 double bonds per molecule,
the sum of the proportions by weight of components $a_1$ to $a_5$ being in each case 100 % by weight,

16

3. Air-drying alkyd resins according to Claim 1 or 2, characterized in that from 20 to 80 % by weight of the unsaturated fatty acids employed as components $a_3$ to $a_5$ are trans-configured fatty acids.

4. Air-drying alkyd resins according to one of Claims 1 to 3, characterized in that from 30 to 100 % by weight of the linoleic acid employed as component $a_4$ comprises 9,11-linoleic acid with conjugated double bonds.

5. Air-drying alkyd resins according to one of Claims 1 to 4, characterized in that the relatively long-chain fatty acids employed as components $a_2$ and $a_5$ are derived from partially hydrogenated fish oils having iodine numbers of from 30 to 70 mg of $I_2$/g.

6. Air-drying alkyd resins according to one of Claims 1 to 5, characterized in that the oil length of the alkyd resins is from 30 to 60 % by weight, preferably from 35 to 50 % by weight, of fatty acid (component a), based on the overall weight of the alkyd resin.

7. Air-drying alkyd resins according to one of Claims 1 to 6, characterized in that from 0.5 to 2.0 % by weight, based on the weight of components a to d, of maleic acid and/or maleic anhydride is used for the composition of the alkyd resins.

8. Air-drying alkyd resins according to one of Claims 1 to 7, characterized in that from 10 to 90 % by weight of the monocarboxylic acid employed as component d is benzoic acid.

9. Coating composition based on air-drying alkyd resins, characterized in that the coating composition contains air-drying alkyd resins according to one of Claims 1 to 8 as binder.

10. Coating composition according to Claim 9, characterized in that the coating composition contains
    1.) from 20 to 90 % by weight of air-drying alkyd resins as binder,
    2.) from 5 to 75 % by weight of one or more organic solvents
    3.) from 0 to 50 % by weight of pigments and/or fillers, and
    4.) from 0.01 to 3.0 % by weight of siccatives and, if desired, other auxiliaries and additives, the sum of the proportions by weight of components 1 to 4 being in each case 100 % by weight.

11. Process for the coating of wood, in which an air-drying coating composition is applied and dried, characterized in that a coating composition according to Claim 9 or 10 is employed.

12. Use of the coating compositions according to Claim 9 or 10 as coating materials for buildings.

13. Use of the coating compositions according to Claim 9 or 10 for the coating of wood.

**Claims for the following Contracting State : ES**

1. Process for the preparation of air-drying alkyd resins, in which
    a) from 30 to 80 % by weight of fatty acid
    b) from 5 to 35 % by weight of one or more di- and/or polyols
    c) from 5 to 30 % by weight of one or more aromatic and/or aliphatic and/or cycloaliphatic carboxylic acids having at least 2 carboxyl groups, or esterifiable derivatives thereof, and
    d) from 0 to 20 % by weight of one or more, preferably aromatic monocarboxylic acids,
    are reacted with one another, the sum of the proportions by weight of components a to d being in each case 100 % by weight, characterized in that
    I.) the fatty acid employed as component a is a mixture of different fatty acids and the mixture contains
        $a_1$) from 10 to 40 % by weight of one or more saturated, short-chain fatty acids having 18 or fewer carbon atoms per molecule,
        $a_2$) from 0 to 25 % by weight of one or more saturated, long-chain fatty acids with more than 18 carbon atoms per molecule,
        $a_3$) from 15 to 40 % by weight of oleic and/or palmitoleic acid
        $a_4$) from 0 to 30 % by weight of linoleic acid, and

17

EP 0 407 796 B1

$a_5$) from 10 to 40 % by weight of one or more other unsaturated, long-chain fatty acids having at least 20 carbon atoms per molecule and having from 1 to 6 double bonds per molecule,

the sum of the proportions by weight of components $a_1$ to $a_5$ being in each case 100 % by weight, and

II.) the iodine number of the fatty acid mixture employed as component a is between 50 and 100 mg of $I_2$/g.

2. Process according to Claim 1, characterized in that the mixture of fatty acids employed as component a contains

$a_1$) from 15 to 30 % by weight of one or more saturated, short-chain fatty acids having 18 or fewer carbon atoms per molecule,

$a_2$) from 4 to 20 % by weight of one or more saturated, long-chain fatty acids with more than 18 carbon atoms per molecule,

$a_3$) from 20 to 30 % by weight of oleic and/or palmitoleic acid

$a_4$) from 10 to 20 % by weight of linoleic acid, and

$a_5$) from 15 to 30 % by weight of one or more other unsaturated, long-chain fatty acids having at least 20 carbon atoms per molecule and having from 1 to 6 double bonds per molecule,

the sum of the proportions by weight of components $a_1$ to $a_3$ being in each case 100 % by weight.

3. Process according to Claim 1 or 2, characterized in that from 20 to 80 % by weight of the unsaturated fatty acids employed as components $a_3$ to $a_5$ are transconfigured fatty acids.

4. Process according to one of Claims 1 to 3, characterized in that from 30 to 100 % by weight of the linoleic acid employed as component $a_4$ comprises 9,11-linoleic acid with conjugated double bonds.

5. Process according to one of Claims 1 to 4, characterized in that the relatively long-chain fatty acids employed as components $a_2$ and $a_5$ are derived from partially hydrogenated fish oils having iodine numbers of from 30 to 70 mg of $I_2$/g.

6. Process according to one of Claims 1 to 5, characterized in that the oil length of the alkyd resins is from 30 to 60 % by weight, preferably from 35 to 50 % by weight, of fatty acid (component a), based on the overall weight of the alkyd resin.

7. Process according to one of Claims 1 to 6, characterized in that from 0.5 to 2.0 % by weight, based on the weight of components a to d, of maleic acid and/or maleic anhydride is used for the composition of the alkyd resins.

8. Process according to one of Claims 1 to 7, characterized in that from 10 to 90 % by weight of the monocarboxylic acid employed as component d is benzoic acid.

9. Process for the preparation of coating compositions based on air-drying alkyd resins, characterized in that the coating composition contains air-drying alkyd resins which have been prepared by a process according to one of Claims 1 to 8 as binder.

10. Process according to Claim 9, characterized in that the coating composition contains

1.) from 20 to 90 % by weight of air-drying alkyd resins as binder,

2.) from 5 to 75 % by weight of one or more organic solvents

3.) from 0 to 50 % by weight of pigments and/or fillers, and

4.) from 0.01 to 3.0 % by weight of siccatives and, if desired, other auxiliaries and additives,

the sum of the proportions by weight of components 1 to 4 being in each case 100 % by weight.

11. Process for the coating of wood, in which an air-drying coating composition is applied and dried, characterized in that a coating composition which has been prepared according to Claim 9 or 10 is employed.

12. Use of the coating compositions which have been prepared according to Claim 9 or 10 as coating materials for buildings.

18

**13.** Use of the coating compositions which have been prepared according to Claim 9 or 10 for the coating of wood.

**Revendications**

**Revendications pour les Etats contractants suivants : AT, BE, CH, DE, DK, FR, GB, IT, LI, NL, SE**

**1.** Résines alkydes séchant à l'air, qui ont été préparées à partir de
   a) 30 à 80 % en poids d'acides gras
   b) 5 à 35 % en poids d'un ou de plusieurs diols et/ou polyols
   c) 5 à 30 % en poids d'un ou de plusieurs acides carboxyliques aromatiques et/ou aliphatiques et/ou cycloaliphatiques ayant au moins 2 groupements carboxyles, respectivement leurs dérivés estérifiables et
   d) 0 à 20 % en poids d'un ou de plusieurs acides monocarboxyliques, de préférence aromatiques,
   la somme des proportions en poids des composants a à d étant à chaque fois de 100 % en poids, caractérisées en ce que
   I. l'acide gras utilisé en tant que composant a est un mélange de divers acides gras et que le mélange contient de
      $a_1$) 10 à 40 % en poids d'un ou de plusieurs acides gras à chaîne courte, saturés, ayant 18 ou moins de 18 atomes de C par molécule,
      $a_2$) 0 à 25 % en poids d'un ou de plusieurs acides gras à longue chaîne, saturés, ayant plus de 18 atomes de C par molécule,
      $a_3$) 15 à 40 % en poids d'acide oléique et/ou d'acide palmito-oléique
      $a_4$) 0 à 30 % en poids d'acide linoléique et
      $a_5$) 10 à 40 % en poids d'un ou de plusieurs acides gras à longue chaîne, insaturés, ayant au moins 20 atomes de C par molécule et de 1 à 6 liaisons doubles par molécule, la somme des proportions en poids des composants $a_1$ à $a_5$ étant à chaque fois de 100 % en poids, et
   II. l'indice d'iode du mélange d'acides gras utilisé en tant que composant a se situe entre 50 et 100 mg $J_2$/g.

**2.** Résines alkydes séchant à l'air selon la revendication 1, caractérisées en ce que le mélange d'acides gras utilisé en tant que composant a contient de
   $a_1$) 15 à 30 % en poids d'un ou de plusieurs acides gras à chaîne courte, saturés, ayant 18 ou moins de 18 atomes de C par molécule,
   $a_2$) 4 à 20 % en poids d'un ou de plusieurs acides gras à longue chaîne, saturés, ayant plus de 18 atomes de C par molécule,
   $a_3$) 20 à 30 % en poids d'acide oléique et/ou d'acide palmito-oléique
   $a_4$) 10 à 20 % en poids d'acide linoléique et
   $a_5$) 15 à 30 % en poids d'un ou de plusieurs acides gras à longue chaîne, insaturés, ayant au moins 20 atomes de C par molécule et de 1 à 6 liaisons doubles par molécule, la somme des proportions en poids des composants $a_1$ à $a_5$ étant à chaque fois de 100 % en poids.

**3.** Résines alkydes séchant à l'air selon la revendication 1 ou 2, caractérisées en ce que les acides gras insaturés utilisés en tant que composants $a_3$ à $a_5$ sont, jusqu'à raison de 20 à 80 % en poids, des acides gras en configuration trans.

**4.** Résines alkydes séchant à l'air selon l'une quelconque des revendications 1 à 3, caractérisées en ce que l'acide linoléique utilisé en tant que composant $a_4$ se compose, jusqu'à raison de 30 à 100 % en poids, d'acide linoléique-9,11 ayant des liaisons doubles conjuguées.

**5.** Résines alkydes séchant à l'air selon l'une quelconque des revendications 1 à 4, caractérisées en ce que les acides gras à chaîne plus longue, utilisés en tant que composant $a_2$ et $a_5$ proviennent d'huiles de poisson partiellement hydrogénées ayant des indices d'iode de 30 à 70 mg $J_2$/g.

**6.** Résines alkydes séchant à l'air selon l'une quelconque des revendications 1 à 5, caractérisées en ce que le rapport huile/résine des résines alkydes est de 30 à 60 % en poids, de préférence de 35 à 50 % en poids d'acides gras (composant a), par rapport au poids total de la résine alkyde.

**7.** Résines alkydes séchant à l'air selon l'une quelconque des revendications 1 à 6, caractérisées en ce que, pour la synthèse des résines alkydes, on utilise conjointement de 0,5 à 2,0 % en poids , par rapport au poids des composants a à d, d'acide maléique, respectivement d'anhydride maléique.

**8.** Résines alkydes séchant à l'air selon l'une quelconque des revendications 1 à 7, caractérisées en ce que de 10 à 90 % en poids de l'acide monocarboxylique utilisé en tant que composant d est de l'acide benzoïque.

**9.** Agent de revêtement à base de résines alkydes séchant à l'air, caractérisé en ce que l'agent de revêtement contient, en tant que liant, des résines alkydes séchant à l'air selon l'une quelconque des revendications 1 à 8 .

**10.** Agent de revêtement selon la revendication 9 caractérisé en ce que l'agent de revêtement contient
1.) de 20 à 90 % en poids de résines alkydes séchant à l'air en tant que liant,
2.) de 5 à 75 % en poids d'un ou de plusieurs, solvants organiques
3.) de 0 à 50 % en poids de pigments ou/et de charges et
4.) de 0,01 à 3,0 % en poids d'agents siccatifs et, le cas échéant, d'autres additifs et adjuvants, la somme des proportions en poids des composants 1 à 4 étant à chaque fois de 100 % en poids.

**11.** Procédé de revêtement du bois, lors duquel on applique un agent de revêtement séchant à l'air et on le sèche, caractérisé en ce que l'on utilise un agent de revêtement selon la revendication 9 ou 10.

**12.** Utilisation des agents de revêtement selon la revendication 9 ou 10 en tant qu'agent de peinture bâtiment.

**13.** Utilisation des agents de revêtement selon la revendication 9 ou 10 pour le revêtement du bois.

**Revendications pour l'Etat contractant suivant : ES**

**1.** Procédé de préparation de résines alkydes séchant à l'air, lors duquel on fait réagir ensemble
a) 30 à 80 % en poids d'acides gras
b) 5 à 35 % en poids d'un ou de plusieurs diols et/ou polyols
c) 5 à 30 % en poids d'un ou de plusieurs acides carboxyliques aromatiques et/ou aliphatiques et/ou cycloaliphatiques ayant au moins 2 groupements carboxyles, respectivement leurs dérivés estérifiables et
d) 0 à 20 % en poids d'un ou de plusieurs acides monocarboxyliques, de préférence aromatiques, la somme des proportions en poids des composants a à d étant à chaque fois de 100 % en poids, caractérisé en ce que
I. l'acide gras utilisé en tant que composant a est un mélange de divers acides gras et que le mélange contient de
$a_1$) 10 à 40 % en poids d'un ou de plusieurs acides gras à chaîne courte, saturés, ayant 18 ou moins de 18 atomes de C par molécule,
$a_2$) 0 à 25 % en poids d'un ou de plusieurs acides gras à longue chaîne, saturés, ayant plus de 18 atomes de C par molécule,
$a_3$) 15 à 40 % en poids d'acide oléique et/ou d'acide palmito-oléique
$a_4$) 0 à 30 % en poids d'acide linoléique et
$a_5$) 10 à 40 % en poids d'un ou de plusieurs acides gras à longue chaîne, insaturés, ayant au moins 20 atomes de C par molécule et de 1 à 6 liaisons doubles par molécule, la somme des proportions en poids des composants $a_1$ à $a_5$ étant à chaque fois de 100 % en poids, et
II. l'indice d'iode du mélange d'acides gras utilisé en tant que composant a se situe entre 50 et 100 mg $J_2$/g.

**2.** Procédé selon la revendication 1, caractérisé en ce que le mélange d'acides gras utilisé en tant que composant a contient de
$a_1$) 15 à 30 % en poids d'un ou de plusieurs acides gras à chaîne courte, saturés, ayant 18 ou moins de 18 atomes de C par molécule,
$a_2$) 4 à 20 % en poids d'un ou de plusieurs acides gras à longue chaîne, saturés, ayant plus de 18 atomes de C par molécule,

$a_3$) 20 à 30 % en poids d'acide oléique et/ou d'acide palmito-oléique

$a_4$) 10 à 20 % en poids d'acide linoléique et

$a_5$) 15 à 30 % en poids d'un ou de plusieurs acides gras à longue chaîne, insaturés, ayant au moins 20 atomes de C par molécule et de 1 à 6 liaisons doubles par molécule, la somme des proportions en poids des composants $a_1$ à $a_5$ étant à chaque fois de 100 % en poids.

3. Procédé selon la revendication 1 ou 2, caractérisé en ce que les acides gras insaturés utilisés en tant que composants $a_3$ à $a_5$ sont, jusqu'à raison de 20 à 80 % en poids, des acides gras en configuration trans.

4. Procédé selon l'une quelconque des revendications 1 à 3, caractérisé en ce que l'acide linoléique utilisé en tant que composant $a_4$ se compose de 30 à 100 % en poids d'acide linoléique-9,11 ayant des liaisons doubles conjuguées.

5. Procédé selon l'une quelconque des revendications 1 à 4, caractérisé en ce que les acides gras à chaîne plus longue, utilisés en tant que composant $a_2$ et $a_5$ proviennent d'huiles de poisson partiellement hydrogénées ayant des indices d'iode de 30 à 70 mg $J_2$/g.

6. Procédé selon l'une quelconque des revendications 1 à 5, caractérisé en ce que le rapport huile/résine des résines alkydes est de 30 à 60 % en poids , de préférence de 35 à 50 % en poids d'acides gras (composant a), par rapport au poids total de la résine alkyde.

7. Procédé selon l'une quelconque des revendications 1 à 6, caractérisé en ce que, pour la synthèse des résines alkydes, on utilise conjointement de 0,5 à 2,0 % en poids, par rapport au poids des composants a à d, d'acide maléique, respectivement d'anhydride maléique.

8. Procédé selon l'une quelconque des revendications 1 à 7, caractérisé en ce que de 10 à 90 % en poids de l'acide monocarboxylique utilisé en tant que composant d est de l'acide benzoïque.

9. Procédé de préparation d'agents de revêtement à base de résines alkydes séchant à l'air, caractérisé en ce que l'agent de revêtement contient, en tant que liant, des résines alkydes séchant à l'air, qui ont été préparées par un procédé selon l'une quelconque des revendications 1 à 8 .

10. Procédé selon la revendication 9, caractérisé en ce que l'agent de revêtement contient
1.) de 20 à 90 % en poids de résines alkydes séchant à l'air en tant que liant,
2.) de 5 à 75 % en poids d'un ou de plusieurs solvants organiques
3.) de 0 à 50 % en poids de pigments ou/et de charges et
4.) de 0,01 à 3,0 % en poids d'agents siccatifs et, le cas échéant, d'autres additifs et adjuvants, la somme des proportions en poids des composants 1 à 4 étant à chaque fois de 100 % en poids.

11. Procédé de revêtement du bois, lors duquel on applique un agent de revêtement séchant à l'air et on le sèche, caractérisé en ce que l'on utilise un agent de revêtement, qui a été préparé selon la revendication 9 ou 10.

12. Utilisation des agents de revêtement, qui ont été préparés selon la revendication 9 ou 10, en tant qu'agent de peinture bâtiment.

13. Utilisation des agents de revêtement, qui ont été préparés selon la revendication 9 ou 10 pour le revêtement du bois.